# EUROPEAN PATENT APPLICATION

(11) **EP 0 915 412 A2**
(43) Date of publication of application: **12.05.1999**
(21) Application number: 98121225.1
(22) Date of filing: 06.11.1998
(51) Int. Cl.: G06F 3/033, A63F 9/00, G06F 19/00

(54) **Electronic game device using doll and method of performing the same**

(30) Priority: 08.11.1997 KR 9758913
(71) Applicant: Seji Electronics Co., Ltd., Yongsan-gu, Seoul (KR); Shin, Beom-Cheol, Bangchuk-Dong, Keyang-Gu, Incheon-Si (KR)
(72) Inventor: Shin, Beom-Cheol, Incheon-Si (KR)
(74) Representative: Viering, Jentschura & Partner

(57) **Abstract**

An electronic game device using a doll and method of performing the same is provided, which controls the motion of a doll instead of a joy stick, to perform an electronic game. The electronic game device includes remote controlling means having a shape of doll, for operating the doll's motion in various ways, to generate a game processing signal for performing an electronic game, and main processing means for receiving the game processing signal from the remote controlling means, to perform corresponding operation of the electronic game and output it as a picture and sound. This electronic game device allows children to be able to easily perform the electronic game since they use the joy stick configured of a doll. Moreover, the doll arouses the children's interest in the game, increasing study effect. The sensors included inside the doll react to its motion so that the children can use the doll as a separate toy as distinguished from the conventional joy stick which has only signal generating function and requires to be connected to a computer or game device.

## Description

### BACKGROUND OF THE INVENTION

### Field of the Invention

The present invention relates to an electronic game device and method of performing the same, and in particular, to an electronic game device using a doll and method of performing the same, which controls the motion of a doll to carry out an electronic game.

### Discussion of Related Art

Electronic games are generally performed using joy sticks or mouses. A user controls the joy stick or mouse to change the location and direction of the joy stick or push the button of the mouse, generating corresponding signal. The processor of a game device or computer receives the signal to carry out a game, varying a picture displayed. However, children have difficult in playing electronic games using a conventional joy stick or mouse because they are not full-grown so that their hands are small and weak.

### SUMMARY OF THE INVENTION

Accordingly, the present invention is directed to an electronic game device using a doll and method of performing the same that substantially obviates one or more of the problems due to limitations and disadvantages of the related art.

An object of the present invention is to provide an electronic game device using a doll and method of performing the same, which uses a joy stick configured of a doll to allow children to perform an electronic game easily.

Another object of the present invention is to provide an electronic game device using a doll and method of performing the same, which employs a doll to arouse children's interest in the game, increasing study effect.

A still another object of the present invention is to provide an electronic game device using a doll and method of performing the same, which employs a doll including a sensor which reacts to the operation of the doll so that the doll can be used separately from the electronic game.

To accomplish the objects of the present invention, there is provided an electronic game device using a doll, including remote controlling means having a shape of doll, for operating the doll's motion in various ways, to generate a game processing signal for performing an electronic game, and main processing means for receiving the game processing signal from the remote controlling means, to perform corresponding operation of the electronic game and output it as a picture and sound.

To accomplish the objects of the present invention, there is also provided a method of performing an electronic game device using a doll, including a controlling step of sensing and storing various state values which are generated by operating the doll's motion in order to perform an electronic game, and radio-transmitting a changed state value as a game processing signal, and a main processing step of receiving the game processing signal, to perform corresponding operation of the electronic game and output corresponding sound and picture.

It is to be understood that both the foregoing general description and the following detailed description are exemplary and explanatory and are intended to provide further explanation of the invention as claimed.

### BRIEF DESCRIPTION OF THE ATTACHED DRAWINGS

The accompanying drawings, which are included to provide a further understanding of the invention and are incorporated in and constitute a part of this specification, illustrate embodiments of the invention and together with the description serve to explain the principles of the invention:

In the drawings:
Fig. 1 shows a rough configuration of an electronic game device using a doll according to the present invention;
Fig. 2 is a block diagram of the electrode game device using a doll according to the present invention;
Fig 3 shows a doll constructing the remote controller of Fig. 2;
Fig. 4 shows a configuration of the joint motion sensor of Fig. 2 according to an embodiment of the present invention;
Figs. 5A, 5B and 5C show configurations of the joint motion sensor of Fig. 2 according to another embodiment of the present invention;
Fig. 6 shows a configuration of the location sensor of Fig. 2 according to an embodiment of the present invention;
Fig. 7 shows a configuration of the location sensor of Fig. 2 according to another embodiment of the present invention;
Figs. 8A to 8D show the doll's positions according to the operations of the location sensors of Figs. 6 and 7; and
Figs. 9 and 10 are flow diagrams of a method of performing an electronic game using a doll according to the present invention.

### DETAILED DESCRIPTION OF PREFERRED EMBODIMENT

Reference will now be made in detail to the preferred embodiments of the present invention, examples of which are illustrated in the accompanying drawings.

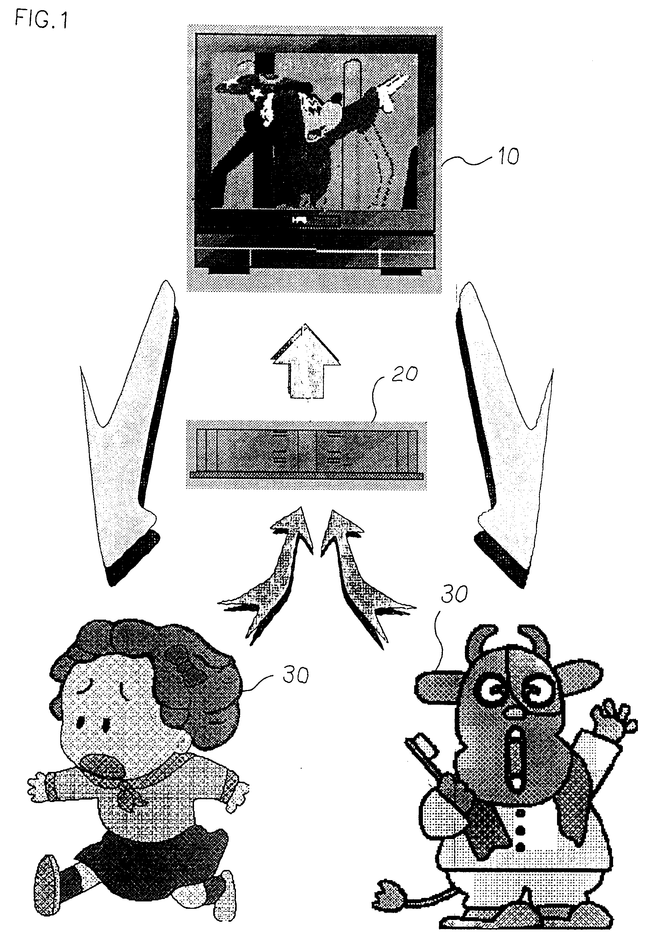

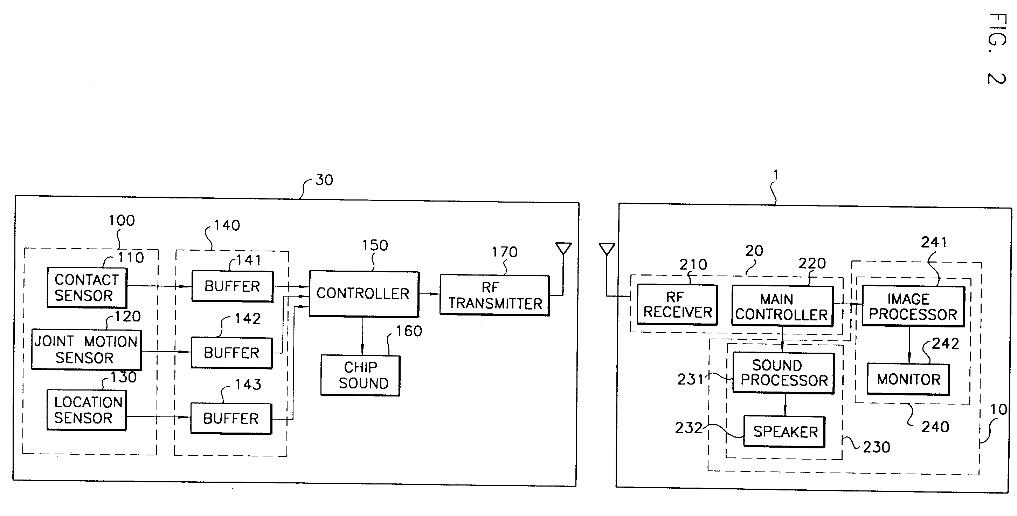

An electronic game device using a doll according to the present invention includes a remote controller 30 and main processor 1, as shown in Figs. 1 and 2. Remote controller 30 is configured of a doll and controls its motion in various ways, to generate game processing signals for performing a game. Main processor 1 which has a main body 20 and monitor receives the game processing signals from remote controller 30 to perform corresponding operations, generating sound and picture. Remote controller 30 configured of a doll includes a joy stick. Referring to Fig. 1, remote controller 30, configure of a doll or animal shape, generates a game control signal according to a child's operation of the doll and sends it to main body 20 of main processor 1. Main body 20 of main processor 1 processes the game control signal received from remote controller 30 using a program to perform corresponding electronic game operation, displaying a picture on monitor 10 and outputting a sound through a speaker.

The configuration and operation of the electronic game device using a doll is described below in detail. Referring to Fig. 2, remote controller 30 includes a sensing section 100 for sensing the motion of the doll to generate state signals, a controller 150, included in the doll, for generating game processing signals for performing an electronic game according to the state signals generated by sensing section 100, an RF transmitter 170, set in the doll, for radio-transmitting the game processing signals generated by controller 150 to main processor 1, a buffering section 140 for buffering the state signals generated by sensing section 100 and sending it to controller 150, and a sound chip 160, included in the doll, for generating and transmitting sound signals under the control of controller 150.

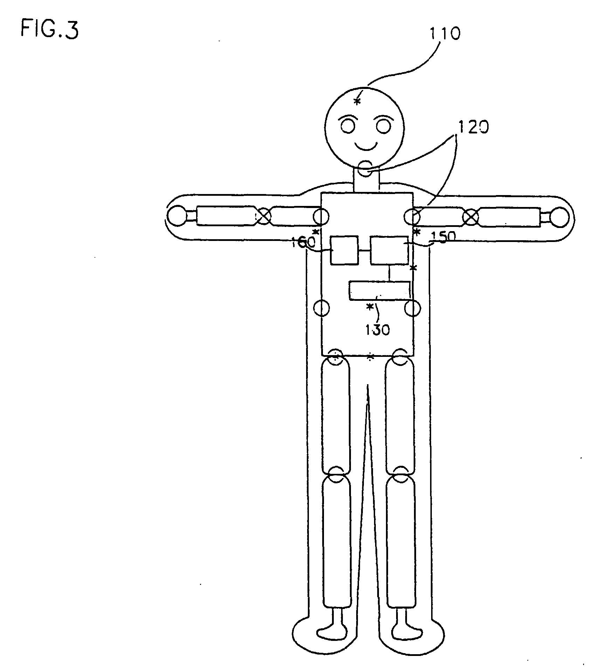

Referring to Fig. 3, sensing section 100 includes a contact sensor 110 which is set to one or plurality of specific points of the doll and senses any contact with the points to generate a contact state signal, a joint motion sensor 120 which is set to the doll's joints and senses its state according to the doll's motion to generate a joint state signal, and a location sensor 130 which is included in the doll and senses the location of the doll according to its motion to generate a location state signal. Contact sensor 110 is configured of a pressure sensor, temperature sensor or infrared sensor.

Main processor 1 includes, as shown in Fig. 2, an RF receiver 210 for receiving the game processing signals radio-transmitted from remote controller 30, a main controller 220 for receiving the game processing signals from RF receiver 210 to carry out corresponding electronic game operation, a sound processing section 230 for performing sound process according to control signals generated by main controller 220 to generate sound signals, and an image processing section 240 for performing image process according to the control signals generated by main controller 220 to display images. Sound processing section 230 includes sound processor 231 for processing sound signals under the control of main controller 220, and a speaker 232 for amplifying the sound signals supplied from sound processor 231. Image processing section 240 includes an image processor 241 for processing image signals under the control of main controller 220, and a monitor 242 for amplifying the image signals sent from image processor 241 and displaying them.

The operation of the electronic game device using a doll according to the present invention is explained below. First of all, when a child changes the doll's motion, sensing section 100 senses this, generating a state signal. That is, the child moves the doll or changes its motion to allow contact sensor 110, joint motion sensor 120 and location sensor 130 to generate a contact state signal, joint motion state signal and location state signal, respectively. These sensors are described below in detail with reference to Fig. 3. Contact sensors 110, configured of a pressure sensor, temperature sensor or infrared sensor and indicated as * in Fig. 3, are set to, for example, the forehead, armpits, side, navel and crotch of the doll. When contact sensors 110 sense any contact using a pressure, temperature or infrared rays, it generates a contact state signal corresponding to a contact location. This contact state signal is buffered by buffer 141 of buffering section 140 and then sent to controller 150.

Joint motion sensors 120, indicated as " in Fig. 3, are set to, for example, the neck, shoulders, elbows, sides, legs, knee joints of the doll. Two sensors each of which has two or three state values may be set to each of the aforementioned portions. In case of the shoulders, for example, two sensors each of which indicates three state values are set to each shoulder, expressing nine state values. Location sensor 130 is set to the chest or middle portion of the doll, as shown in Fig. 3, to sense the locations of four up-and-down and before-and behind directions or six up-and-down, before-and-behind and left-and-right directions, to generate a location state signal, showing current location of the doll's head. According to the value of this location state signal, it is possible to know the state of the doll, in which it lies down, it puts its face down, it stands upside down or it lies on its side.

As described above, the contact state signal, joint motion state signal and location state signal respectively generated by contact sensor 110, joint motion sensor 120 and location sensor 130 are buffered by buffers 141, 142 and 143, respectively, and then sent to controller 150, generating a game processing signal for performing the electronic game. Controller 150 decodes the contact state signal, joint motion state signal and location state signal to operate sound chip 160 to create corresponding sound signal. For example, when a user touches the doll's side to a!low contact sensor 110 to generate corresponding contact state signal, controller 150 controls sound chip 160 to generate laughing sound which expresses tickle. Moreover, when the user touches the doll's forehead during playing at hospital to allow contact sensor 110 to generate corresponding contact state signal, controller 150 controls sound chip 160 to generate a sound which expresses headache. Similarly, controller 150 set inside the doll receives and decodes the joint motion state signal and location state signal to carry out corresponding processes, and controls sound chip 160 to generate corresponding sound signals.

The game processing signal generated by controller 150 is modulated by RF transmitter 170 into an RF signal, being transmitted to main processor 1. The game processing signal is received by RF receiver 210 of main processor 1 to be demodulated into the game processing signal, being sent to main controller 220. Main controller 220 decodes the game processing signal to control the performance of corresponding electronic game operation. That is, main controller 220 controls sound processor 231 and image processor 241 according to the game processing signal, to generate a sound and image through speaker 232 and monitor 242, respectively.

An example of the aforementioned operation is explained below. When the main body is connected to monitor 10, for example, a TV set, and power is turned on, the program of main controller 220 set in the main body operates to allow the user to select a menu. In other words, with power application, the program of main controller 220 operates to control image processor 241, displaying a menu on monitor 242, and simultaneously controls sound processor 231 to output a sound through speaker 232. For instance, the operation of the program of main controller 220 allows expressions such as 'raise the doll's left arm for greeting manners', 'raise the doll's right arm for zoo', and 'raise the doll's left foot for outing place' to be indicated using sounds and pictures. Here, when a motion corresponding to the menu that the user, a child, wants is performed for the doll, a corresponding sensor senses it. That is, when the child moves the doll's joints to raise its left arm, joint motion sensor 120 senses it to generate a joint state signal and send it through buffer 142 to controller 150. Then, controller 150 transmits a game processing signal corresponding to raising the left arm as a radio signal through RF transmitter 170. This game processing signal is received by RF receiver 210 to be sent to main controller 220. Main controller 220 receives this game processing signal and carries out the program corresponding to the greeting manners using image processor 240 and sound processor 230. Conclusively, the electronic game is performed according to the state signal values generated by the sensors set inside the doll, which are contact sensor 110, joint motion sensor 120 and location sensor 130, employing the doll's motion connected to the program.

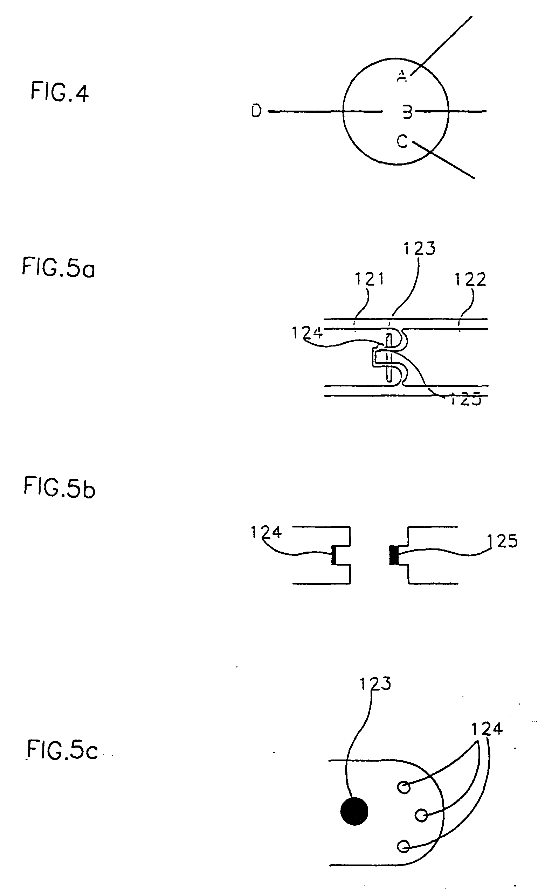

Referring to Fig. 4, joint motion sensor 120, set to the doll's joint, is configured of a variable resistor which outputs one of plurality resistance values set depending on the motions of the joint as a joint state signal. That is, contact terminals A, B and C are variably connected to a fixed terminal D in accordance with motions of the joint, outputting a corresponding resistance value of the contact terminal connected. The joint state signal corresponding to the resistance value is decoded and processed by controller 150. Referring to Figs. 5A, 5B and 5C, joint motion sensor 120, set to the doll's joint, may be configured of a contact point device which outputs one of plurality of contact point values as a joint state signal. Fig. 5A shows the cross section of the joint to which joint motion sensor 120 is set, Fig. 5B shows a contact point terminal and fixed terminal, and Fig. 5C shows a state of contact point terminals.

With the contact point device forming joint motion sensor 120 and including a fixing member 123 for fixing joints 121 and 122, as shown in Fig. 5A, a contact point terminal 124 comes into contact with fixed terminal 125 set to the joint to detect a motion of joint. Here, when the joint moves, other contact point terminal comes into contact with the fixed terminal. Fixed terminal 125 and contact point terminal 124 are formed in prominence and depression shape, as shown in Fig. 5B. The contact portions of both terminals are formed of a metal so that a signal can be outputted when two terminals come into contact with each other. Furthermore, the contact point device may be constructed of one fixed terminal 124 and plurality of contact point terminals 124, as shown in Fig. 5C. With the joint being moved, one of plurality of contact point terminals 124 comes into contact with fixed terminal 125 to output corresponding joint state signal.

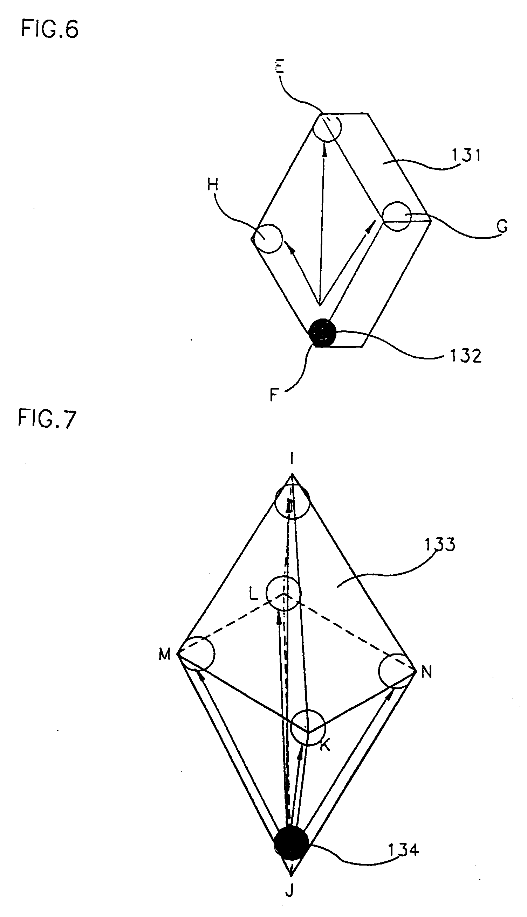

Referring to Fig. 6, location sensor 130 includes a ball 132 whose location varies with the doll's motion and is configured of a hexahedron 131 which generates a location state signal in accordance with top, bottom, front or rear contact point location E, F, G or H which comes into contact with the ball. Location sensor 130 is set inside the center portion of the doll, for example, its chest or middle part, as shown in Fig. 3. Location sensor 130 is constructed in such a manner, as shown in Fig. 6, that plastic box 131 in the form of hexahedron is set on its one edge, metal ball 132 is included inside the hexahedron, and contact points are set to top, bottom, front and rear edges E, F, G and H of the box, outputting a location state signal corresponding to a contact point which comes into contact with the ball as the ball moves.

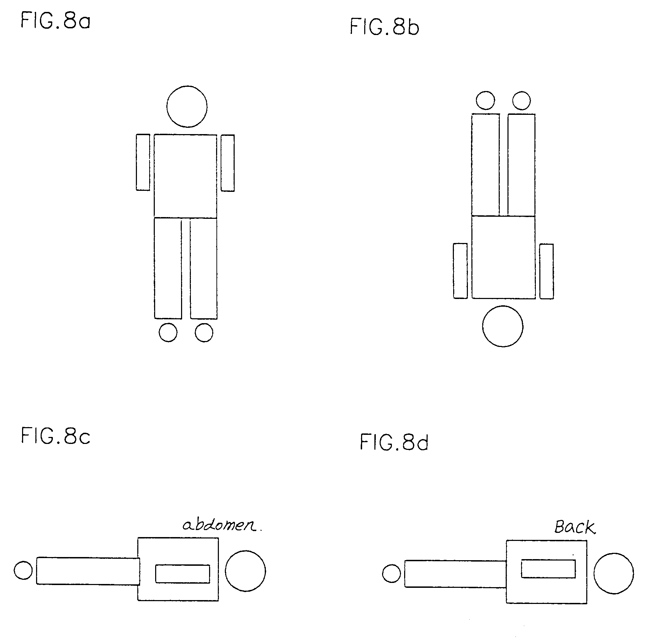

For instance, when the user makes the doll stand with the hexahedron-shape location sensor 131 being set therein, metal ball 132 goes down to come into contact with contact point F, allowing corresponding location state signal to be transmitted to main controller 220 through controller 150. Then, main controller 220 controls output of corresponding image and sound. In this case, the picture shown in Fig. 8A, which expresses a standing state of the doll, is displayed on the monitor and corresponding sound signal is outputted. Meanwhile, when the user makes the doll upside down with the hexahedron-shape location sensor 131 being set therein, metal ball 132 goes up to come into contact with contact point E, transmitting corresponding location state signal through controller 150 to main controller 220 which controls corresponding image and sound to be outputted. That is, the picture shown in Fig. 8B, which expresses a state of the doll's being upside down, is displayed on the monitor and corresponding sound signal is outputted.

Furthermore, when the user lays the doll down with the hexahedron-shape location sensor 131 being set therein, metal ball 132 reaches the back or abdomen of the doll to come into contact with contact point H or G, transmitting corresponding location state signal through controller 150 to main controller 220 which controls corresponding image and sound to be outputted. That is, the picture shown in Fig. 8C or 8D, which expresses a state of the doll's being laid down, is displayed on the monitor and corresponding sound signal is outputted. Referring to Fig. 7, location sensor 130 includes a ball whose location varies with the doll's motion and is configured of an octahedron which outputs a location state signal in accordance with top, bottom, front, rear, left or right contact point location which comes into contact with the ball. Location sensor 130 is set inside the center portion of the doll, for example, its chest or middle part, as shown in Fig. 3. Location sensor 130 is constructed in such a manner, as shown in Fig. 7, that plastic box 133 in the form of octahedron is set on its one edge, metal ball 134 is included inside the octahedron, and contact points are set to top, bottom, front, rear, left and right edges I, J, K, L, M and N of the box, outputting a location state signal corresponding to a contact point which comes into contact with the ball as the ball moves.

For instance, when the user makes the doll stand with the octahedron-shape location sensor 133 being set therein, metal ball 134 goes down to come into contact with contact point J, transmitting corresponding location state signal through controller 150 to main controller 220 which controls output of corresponding image and sound. In this case, the picture shown in Fig. 8A is displayed on the monitor and corresponding sound signal is outputted. Meanwhile, when the user makes the doll upside down with the octahedron-shape location sensor 133 being set therein, metal ball 134 goes up to come into contact with contact point I, transmitting corresponding location state signal through controller 150 to main controller 220 which controls corresponding image and sound to be outputted. That is, the picture shown in Fig. 8B is displayed on the monitor and corresponding sound signal is outputted.

Furthermore, when the user lays the doll down with the octahedron-shape location sensor 133 being set therein, metal ball 134 reaches the back or abdomen of the doll to come into contact with contact point L or K, transmitting corresponding location state signal through controller 150 to main controller 220 which controls corresponding image and sound to be outputted. That is, the picture shown in Fig. 8C or 8D is displayed on the monitor and corresponding sound signal is outputted. When the user lays the doll down on its left or right side with the octahedron-shape location sensor 133 being set therein, metal ball 134 reaches the left or right side of the doll to come into contact with contact point M or N, transmitting corresponding location state signal through controller 150 to main controller 220 which controls corresponding image and sound to be outputted. That is, a picture expressing the doll's being laid down on its left or right side is displayed on the monitor and corresponding sound signal is outputted.

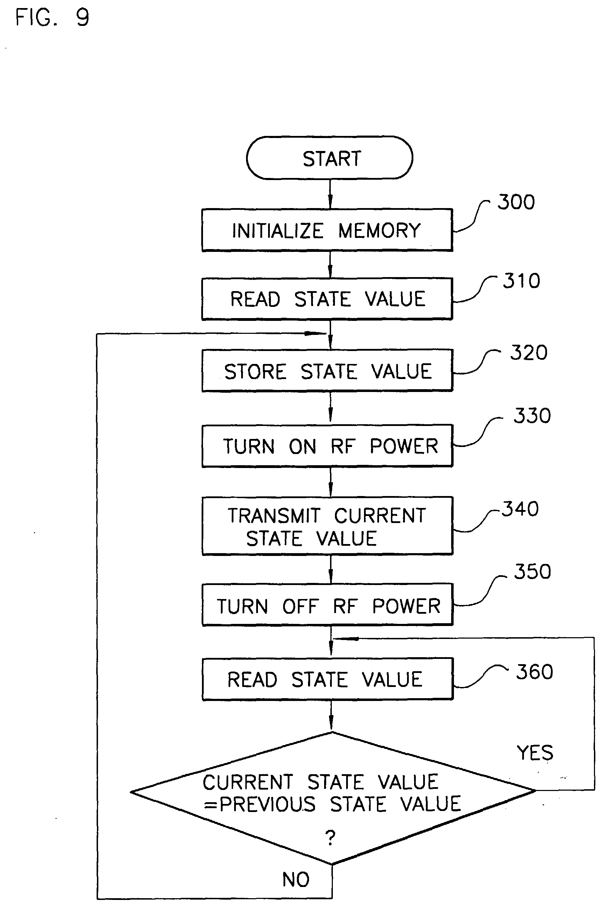

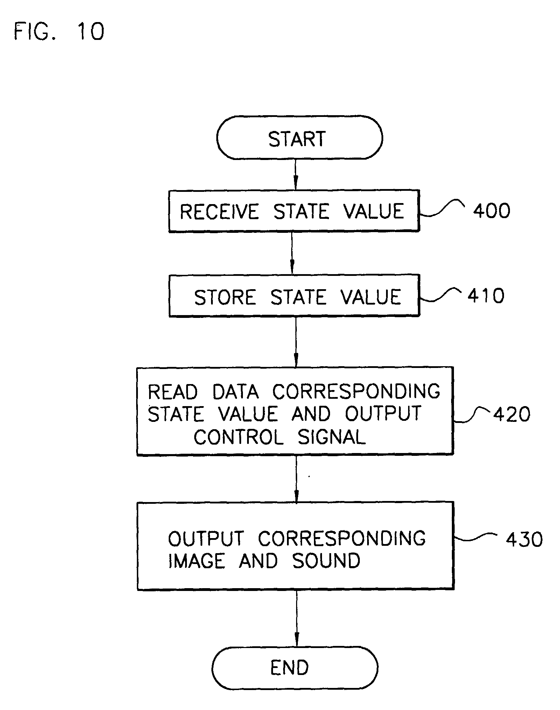

The method of performing an electronic game according to the present invention is carried out through control steps 300 to 370 and main processing steps 400 to 430 shown in Figs. 9 and 10. Control steps 300 to 370, as shown in Fig. 9, detect and store various state values obtained by operating the motion of the doll in order to perform the electronic game and radio-transmit the state values as game processing signals. The control steps consist of state value sensing steps 300 and 310 for sensing the various state values obtained by operating the doll's motion for the purpose of carrying out the game, transmitting steps 320, 330, 340 and 350 for turning on power for transmission to radio-transmit a state value as a game processing signal and turning off the transmission power, state value variation detecting steps 350, 360 and 370 for detecting the variation of the state value, a changed state value transmitting step for repeating transmitting steps 320, 330 and 340 when the state value changes, and a sound generating step for processing a sound signal according to the state value to generate a sound signal from the inside of the doll.

The state values include a contact state value obtained according to whether the user touches one or plurality of portions of the doll or not, a joint state value generated according to the state of one or plurality of joints depending on motions of the doll, and a location state value generated according to the doll's location depending on its motion. Main processing steps 400 to 430, as shown in Fig. 10, receive the game processing signal to perform corresponding operation of the electronic game and generate corresponding picture and sound.

The electronic game performing process using the doll according to the present invention is explained below in more detail. First of all, control steps 300 to 370 are carried out to detect and store various state values obtained by operating the doll's motion in order to perform the game and radio-transmit a changed state value as a game processing signal. A memory to be used as a buffer is initialized, various devices are also initialized and RF power is turned off in step 300. After the initialization, the state value sensing step is performed to sense the various state values generated from the doll's motion. That is, the state value sensing step reads the contact state value obtained according to whether the user touches one or plurality of portions of the doll or not, joint state value generated according to the state of one or plurality of joints depending on the doll's motion, and location state value generated according to the doll's location depending on its motion.

After the reading of state values, transmitting steps 320, 330, 340 and 350 are performed to turn on the transmission power and radio-transmit the state values as the game processing signals. Specifically, the state values read are stored in the buffer in step 320, the RF power is turned on and the state values stored in the buffer are transmitted in step 340. Upon completion of transmission, the RF power is turned off in step 350. Turning on/off of the RF power is for the purpose of reducing power consumption in the battery for the doll, lengthening the battery's life span.

After transmitting steps 320, 330, 340 and 350, state value variation detecting steps 360 and 370 are performed to detect the variation of the state value. Specifically, current state values outputted from the contact sensor, joint motion sensor and location sensor are read in step 360, and they are compared with state values previously stored in the buffer in steps 360 and 370. Here, when the current state values are different from the state values previously stored in the buffer, the changed state value transmitting step is carried out to repeat transmitting steps 320, 330, 340 and 350. In other words, when a state value changes, transmitting steps 320, 330, 340 and 350 are repeated to store the current state value in the buffer and then transmit it. When the state value is not changed, state value variation detecting steps 360 and 370 are repeated until the state value changes.

Meantime, the sound generating step is carried out according to the state values of contact state value, joint state value and location state value. Specifically, controller 150 included in the doll processes a sound signal according to the contact state value, joint state value and location state value, generating a sound signal through sound chip 160 set inside the doll. The state value which is encoded and transmitted in the transmitting steps is received and decoded by main controller 220, being used for performing main processing steps 400 to 430 where the game processing signal is received to carry out corresponding operation of the electronic game, outputting corresponding picture and sound. Specifically, the transmitted state value is received in step 400, stored in step 410, and a program corresponding to the state value is executed to read data, generating a control signal in step 420. That is, the control signal corresponding to a picture to be displayed and sound to be outputted is generated according to the state value in step 420. The picture is displayed on the monitor and sound is outputted through the speaker according to the picture and sound signals.

The present invention has the following advantages. First of all, children can easily perform the electronic game since they use the joy stick configured of a doll. Secondly, the doll arouses the children's interest in the game, increasing study effect. Thirdly, the sensors included inside the doll react to its motion so that the children can use the doll as a separate toy as distinguished from the conventional joy stick which has only signal generating function and requires to be connected to a computer or game device.

It will be apparent to those skilled in the art that various modifications and variations can be made in the electronic game device using a doll and method of performing the same of the present invention without departing from the spirit or scope of the invention. Thus, it is intended that the present invention cover the modifications and variations of this invention provided they come within the scope of the appended claims and their equivalents.

## Claims

1. An electronic game device using a doll, comprising:
remote controlling means having a shape of doll, for operating the doll's motion in various ways, to generate a game processing signal for performing an electronic game; and
main processing means for receiving the game processing signal from the remote controlling means, to perform corresponding operation of the electronic game and output it as a picture and sound.

2. The device as claimed in claim 1, wherein the remote controlling means comprises:
sensing means for sensing the motion of the doll, to generate a state signal;
controlling means for generating the game processing signal for performing the electronic game according to the state signal sent from the sensing means, the controlling means being included in the doll; and
transmitting means for radio-transmitting the game processing signal sent from the controlling means to the main processing means, the transmitting means being set in the doll.

3. The device as claimed in claim 2, wherein the sensing means comprises:
a contact sensor, set to one or plurality of specific portions of the doll, which is for sensing any contact with the specific portions, to generate a contact state signal;
a joint motion sensor, set to the joint of the doll, which is for sensing a state of the doll's joint in accordance with a doll's motion, to generate a joint state signal; and
a location sensor, set inside the doll, which is for sensing a location of the doll in accordance with a doll's motion, to generate a location state signal.

4. The device as claimed in claim 3, wherein the joint motion sensor is configured of a variable resistor which is set to the joint of the doll and outputs one of plurality of resistance values as a joint state signal, the plurality of resistance values being set according to motions of the joint.

5. The device as claimed in claim 3, wherein the joint motion sensor is configured of a contact point device which is set to the joint of the doll and outputs one of plurality of contact point values as a joint state signal, the plurality of contact point values being set according to motions of the joint.

6. The device as claimed in claim 3, wherein the location sensor is configured of a hexahedron which includes a ball whose location varies with the doll's motion and outputs a location state signal in accordance with top, bottom, left or right contact point with which the ball comes into contact.

7. The device as claimed in claim 3, wherein the location sensor is configured of an octahedron which includes a ball whose location varies with the doll's motion and outputs a location state signal in accordance with top, bottom, left, right, front or rear contact point with which the ball comes into contact.

8. The device as claimed in claim 3, wherein the contact sensor is configured of a pressure sensor which is set to one or plurality of specific portions of the doll to sense any contact with the portions.

9. The device as claimed in claim 3, wherein the contact sensor is configured of a temperature sensor which is set to one or plurality of specific portions of the doll to sense any contact with the portions.

10. The device as claimed in claim 3, wherein the contact sensor is configured of an infrared sensor which is set to one or plurality of specific portions of the doll to sense any contact with the portions.

11. The device as claimed in claim 2, wherein the remote controlling means further comprises buffering means for buffering the state signal sent from the sensing means and sending it to the controlling means.

12. The device as claimed in claim 2, wherein the remote controlling means further comprises a sound chip for generating a sound signal under the control of the controlling means and transmitting it, the sound chip being included in the doll.

13. The device as claimed in claim 1, wherein the main processing means comprises:
receiving means for receiving the game processing signal radio-transmitted by the remote controlling means;
main controlling means for receiving the game processing signal received by the receiving means, to control the performance of corresponding operation of the electronic game;
sound processing means for processing a sound according to a control signal generated by the main controlling means, to generate a sound signal; and
image processing means for processing an image according to a control signal generated by the main controlling means, to display an image.

14. A method of performing an electronic game device using a doll, comprising:
a controlling step of sensing and storing various state values which are generated by operating the doll's motion in order to perform an electronic game, and radio-transmitting a changed state value as a game processing signal; and
a main processing step of receiving the game processing signal, to perform corresponding operation of the electronic game and output corresponding sound and picture.

15. The method as claimed in claim 14, wherein the controlling step comprises:
a state value sensing step of sensing the various state values which are generated by operating the doll's motion in order to perform an electronic game;
a transmitting step of turning on power for transmission to radio-transmit the state values as the game processing signal and turning off the power for transmission;
a state value variation detecting step of detecting the variation of any state value when it changes; and
a changed state value transmitting step of repeating the transmitting step when any state value change.

16. The method as claimed in claim 14, wherein the state values include a contact state value generated when there is any contact with one or plurality of specific portions of the doll, a joint state value generated according to a state of one or plurality of joints depending on doll's motions, and a location state value generated according to a location of the doll depending on a doll's motion.

17. The method as claimed in claim 15, wherein the controlling step further comprises a sound generating step of processing a sound signal according to the state values to generate a sound signal from the inside of the doll.
